# EUROPEAN PATENT SPECIFICATION

(11) **EP 2 564 048 B1**
(45) Date of publication and mention of the grant of the patent: **01.02.2017**
(21) Application number: 11725194.2
(22) Date of filing: 27.04.2011
(51) Int. Cl.: F02D 41/20, F02M 41/00, F02D 41/30, F02D 41/34, F02D 41/40, F02D 41/38, F02M 47/02

(54) **FUEL INJECTION RATE SHAPING IN AN INTERNAL COMBUSTION ENGINE**
Kraftstoffeinspritzratenmodellierung in einem Verbrennungsmotor
Formage du débit d'injection de carburant dans un moteur à combustion interne

(30) Priority: 27.04.2010 EP 10425139
(43) Date of publication of application: 06.03.2013
(73) Proprietor: C.R.F. Società Consortile per Azioni, 10043 Orbassano (TO) (IT)
(72) Inventor: CASALONE, Marco, I-10043 Orbassano (IT); TONETTI, Marco, I-10043 Orbassano (IT)
(74) Representative: Bergadano, Mirko
(86) International application number: PCT/IB2011/000910
(87) International publication number: WO 2011/135442

(56) References cited:
- EP-A1- 1 657 422
- EP-A1- 1 795 738
- EP-A2- 1 281 852
- EP-A2- 1 344 922
- WO-A2-2008/152480

## Description

### TECHNICAL FIELD OF THE INVENTION

The present invention relates to fuel injection rate shaping (IRS) in an internal combustion engine, in particular of the type provided with a common rail fuel injection system.

### STATE OF THE ART

As is known, in latest generation common rail fuel injection systems, the electroinjectors are controlled electronically by an electronic control unit appropriately programmed to supply the electroinjectors with electrical commands such as to provide fuel injection strategies specifically designed to achieve given targets in terms of fuel consumption or levels of emission of pollutant substances.

For example, EP 1,035,314 B1 in the name of the Applicant discloses a common rail fuel injection system in which the electronic control unit is programmed to cause the fuel injection system to carry out, in one and the same engine cylinder and in one and the same engine cycle, multiple temporally consecutive fuel injections comprising:
- a main fuel injection, if need split into two main fuel sub-injection, around the end-of-compression top dead centre;
- two fuel injections prior to the main fuel injection, one sufficiently far from the main fuel injection as to give rise to a combustion distinct from that of the main fuel injection, and one sufficiently close to the main fuel injection as to give rise to a combustion continuous with that of the main fuel injection; and
- two fuel injections subsequent to the main fuel injection, one sufficiently far from the main fuel injection as to give rise to a combustion distinct from that of the main fuel injection and if need split into two or more fuel sub-injections, and one sufficiently close to the main fuel injection as to give rise to a combustion continuous with that of the main fuel injection.

FR 2,761,113 B1 discloses, instead, a common rail fuel injection system in which the electronic control unit is programmed to cause the fuel injection system to operate in two distinct operating modes, in both of which a main fuel injection and a preceding pilot fuel injection are carried out in one and the same engine cylinder and in one and the same engine cycle. In the first operating mode, however, the pilot fuel injection is performed sufficiently far from the main fuel injection as to be hydraulically separated from the latter by a dwell time, whereas in the second operating mode the pilot fuel injection is performed sufficiently close to the main fuel injection as to partially overlap the latter. In addition, the common rail fuel injection system is caused to operate in the first operating mode when the engine is required to operate at medium-to-low speed and/or load, and in the second operating mode when the engine is required to operate at high speed and/or load.

EP 1,657,422 A1 and EP 1,795,738 A1 in the name of the Applicant disclose, instead, a common rail fuel injection system in which the electronic control unit is programmed to cause a particular fuel injection mode, generally referred to as "fuel injection rate shaping", to be performed. In particular, the electronic control unit is programmed to supply an electroinjector with at least a first electrical command, with a pre-set time duration, to cause a pilot fuel injection to be performed, and a subsequent electrical command, with a duration depending upon the engine operating conditions, to cause a main fuel injection to be performed, wherein the two electrical commands are separated in time by an electrical dwell time such that the main fuel injection starts without any discontinuity in time with respect to the pilot fuel injection, thus giving rise to a so-called "two-hump" instantaneous fuel flow rate profile.

In order for the constraint relating to the main fuel injection starting without any discontinuity in time with respect to the pilot fuel injection to be met, in the aforementioned patent documents, various fuel injection rate shapings are proposed, in one of which, as in FR 2,761,113 B1, the pilot fuel injection is so close to the main fuel injection as to overlap the latter, whilst in another the main fuel injection starts exactly when the pilot fuel injection end.

### OBJECT AND SUMMARY OF THE INVENTION

The Applicant has carried out an in-depth experimental campaign aimed at quantifying, on the one hand, the benefits, in terms of reduction of fuel consumption and of levels of emission of pollutant substances, deriving from the implementation of fuel injection rate shaping strategies in which the main fuel injection starts without any discontinuity in time with respect to the pilot fuel injection and at identifying, on the other hand, specific modes of use of fuel injection rate shaping that would maximize said benefits.

In the first place, the experimental campaign has highlighted that, in general, the benefits, in terms of reduction of fuel consumption and of levels of emission of pollutant substances, are less appreciable the higher the degree of overlapping between the pilot fuel injection and the main fuel injection and that hence a main fuel injection that starts exactly when the pilot fuel injection terminates produces more significant benefits than a pilot fuel injection partially overlapping the main fuel injection.

In the second place, the experimental campaign has identified specific modes of use of fuel injection rate shaping, in which the main fuel injection starts exactly when the pilot fuel injection terminates, which increases the intrinsic benefits, in terms of reduction of fuel consumption and levels of emission of pollutant substances, of this type of fuel injection rate shaping.

This experimental campaign has become necessary in so far as the results that the Applicant needed to obtain could not be obtained via computer simulations, since the mathematical models of fuel injection and combustion today available do not guarantee the necessary degree of reliability and accuracy. In fact, up to now it has not been possible to model numerically on the computer the fuel spray and combustion phenomena because the ratio between the minimum size of a fuel microdrop (diameter = 1 µm) and the size of a combustion chamber (diameter = 100 mm) is too small and would require an abnormal number of computation cells (10¹²) In particular, in order to model numerically these phenomena it would be necessary to introduce sub-models, the use of which would inevitably introduce computational errors, which are more significant the more the fuel drops are atomized, i.e., the higher the fuel injection pressure. In numerical terms, to obtain results that adhere to reality, it would be necessary to formulate a numerical model of the phenomena referred to above using a number of fuel microdrops of the order of 1,000,000, but the mathematical models currently available do not allow to exceed a number of fuel microdrops of the order of 1,000.

The aim of the present invention is hence to provide specific modes of use of fuel injection rate shaping in which the main fuel injection starts exactly when the pilot fuel injection terminates, that will enable the intrinsic benefits, in terms of reduction of fuel consumption and of levels of emission of pollutant substances, of this type of fuel injection rate shaping to be increased.

The above aim is achieved by the present invention, which relates to a common rail fuel injection system for an internal combustion engine, as defined in the appended claims.

### BRIEF DESCRIPTION OF THE DRAWINGS

- Figure 1 schematically shows a fuel electroinjector for a common rail fuel injection system; and
- Figures 2 to 7 show graphs of engine quantities.

### DETAILED DESCRIPTION OF PREFERRED EMBODIMENTS OF THE INVENTION

The present invention will now be described in detail with reference to the attached figures for enabling a skilled person skilled to reproduce it and use it. Various modifications to the embodiments described will be immediately evident to the skilled person and the general principles described can be applied to other embodiments and applications without thereby departing from the sphere of protection of the present invention, as defined in the appended claims. Consequently, the present invention must not be considered as being limited to the embodiments described and illustrated, but it must be granted the widest sphere of protection in compliance with the principles and characteristics disclosed and claimed herein.

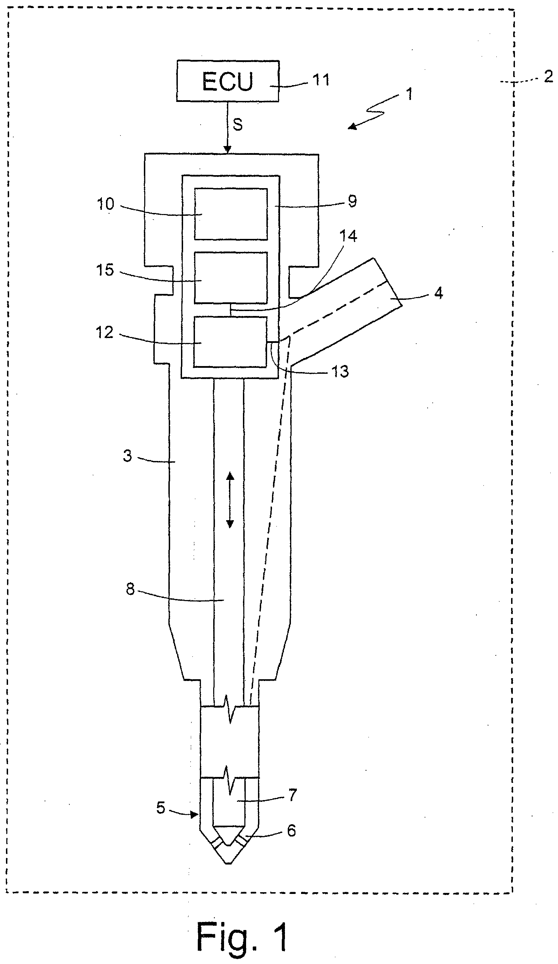

Figure 1 shows a fuel electroinjector, referenced as a whole by 1 , for a high pressure fuel injection system 2, depicted schematically with a dashed line, in particular of the common rail type, for an internal combustion engine (not shown), in particular a diesel engine.

Fuel electroinjector 1 comprises a hollow injector body 3 extending along a longitudinal axis and having a side fuel inlet 4 designed to be fluidically connected, by means of a high pressure fuel supply duct, to the common rail, which is in turn fluidically connected to a high pressure pump (not shown) of the fuel injection system 2. The injector body 3 terminates with a fuel nebulizer 5, which basically comprises a fuel injection nozzle 6 fluidically communicating with the fuel inlet 4 through a duct, depicted with a dashed line, and having a conical tip provided with fuel injection holes, and an shutter needle 7, axially slidable within the fuel nebulizer 5 along opening and closing strokes and having a conical tip designed to engage the conical tip of the fuel injection nozzle 6 for opening and closing the holes of the fuel injection nozzle 6 under the action of a control rod 8 axially slidable in the bottom part of the injector body 3. In a different embodiment, the shutter needle 7 is made of a single piece with the control rod 8, which, hence, opens and closes directly the holes of the fuel injection nozzle 6.

A fuel metering servovalve 9 designed to control the motion of the control rod 8 is housed in the top part of the injector body 3. Fuel metering servovalve 9 comprises an electric actuator 10 controlled by an electronic control unit 11 programmed to supplying the electric actuator 10, during each fuel injection phase and corresponding fuel combustion cycle in an engine cylinder, with one or more electrical commands to cause corresponding fuel injections to be performed. In the present description and in the claims, the term "electrical command" is meant to indicate an electric current signal with a given time duration and evolution.

Fuel metering servovalve 9 further comprises a control chamber 12, which fluidically communicates permanently with the fuel inlet 4 through an inlet passage 13 and with a fuel discharge (not shown) through a fuel outlet passage 14, which is opened and closed by a shutter 15 that co-operates with a corresponding valve seat, where the outlet passage 14 is arranged, to fill or empty the control chamber 12 and thus cause the control rod 8 to perform axial opening and closing strokes in response to a reduction or an increase in the fuel pressure in the control chamber 12, thus causing opening and closing of the fuel nebulizer 5 and hence fuel injection or otherwise into the respective engine cylinder.

Fuel metering servovalve 9 can be either of the type with a solenoid electric actuator 10 or of the type with a piezoelectric electric actuator 10, and may be either of the type with so-called "unbalanced" hydraulic architecture, in which the shutter element 15 is subject, when closed, to countering actions of fuel pressure on one side and of urging means, generally in the form of a spring, on the other, or of the type with so-called "balanced" hydraulic architecture, in which the shutter element 15 is subject, when closed, only to the action of the urging means in so far as the axial urge exerted by the fuel on the actuator is substantially zero.

From EP 1,106,816 B1 in the name of the Applicant a fuel metering servovalve is for example known with a solenoid electric actuator and unbalanced hydraulic architecture, in which the valve seat is a conical seat where a calibrated portion of the fuel outlet passage of the control chamber gives out, whilst the shutter element is a ball controlled by a stem that is slidable in a sleeve under the action of the electric actuator.

From EP 1,795,738 A1 and from EP 1,621,764 B1, both in the name of the Applicant, a fuel metering servovalve is instead known with a solenoid electric actuator and balanced hydraulic architecture, in which the shutter element is a sleeve axially slidable in a fluid-tight way on an axially fixed stem, where the outlet passage is arranged, while the valve seat is an annular shoulder defined by a radiusing area between the stem and a flange. The radiusing area is made of a single piece with the stem and the stem extends from the radiusing area in cantilever fashion. The radiusing area is housed in the injector body and is kept axially in contact, in a fluid-tight way, against a shoulder of the injector body by a threaded ring nut screwed on an internal thread.

A fuel metering servovalve with a solenoid actuator and balanced hydraulic architecture different from the one illustrated in the two previous patent documents is, for example, known from WO 2009/092507 A1 and WO 2009/092484 A1.

From EP 1,612,398 B1 in the name of the Applicant and from WO 2008/138800 A1, a fuel metering servovalve with piezoelectric electric actuator and unbalanced hydraulic architecture is instead known, wherein the shutter element is a stem axially slidable in a fluid-tight way on an axially fixed sleeve, while the valve seat is an annular shoulder of the sleeve.

With reference once again to Figure 1, according to a first aspect of the present invention, the electronic control unit 11 is programmed to control fuel metering servovalve 9 so as to implement a fuel injection rate shaping strategy such that the fuel electroinjector 1 carries out, in an engine cylinder and in an engine cycle, a fuel injection phase comprising at least a first fuel injection, hereinafter referred to as "pilot fuel injection", and a subsequent fuel injection, hereinafter referred to as "main fuel injection", which starts without any discontinuity in time with respect to the pilot fuel injection, and exactly when the latter terminates.

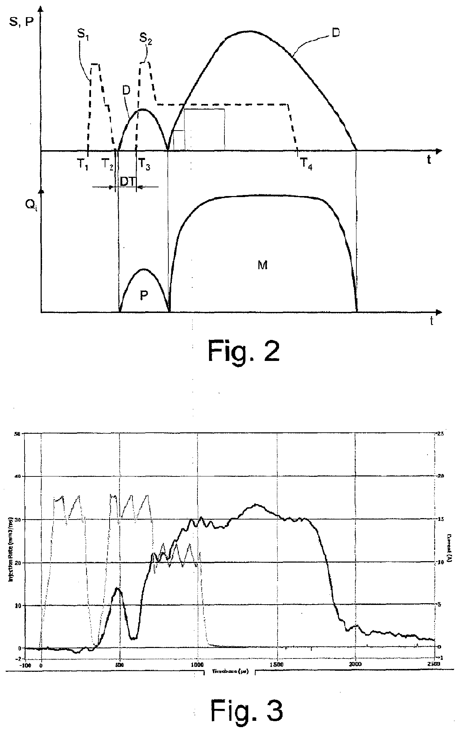

Consequently, for description convenience, in the following description, the term "injection rate shaping" will be used to indicate a specific fuel injection phase comprising a pilot fuel injection and a subsequent main fuel injection, which starts without any discontinuity in time with respect to the pilot fuel injection, substantially when the latter terminates, in such a way as to rule out the case of partial and, from an engine standpoint, significant overlapping of the pilot and main fuel injections, thus causing the two-fuel hump injection profile illustrated in Figure 2.

In addition, the adverb "substantially" used to define when the main fuel injection starts with respect to the pilot fuel injection is herein used to include both the ideal case, shown in Figure 2, in which the hydraulic dwell time between the pilot fuel injection and the main fuel injection is zero, so that the main fuel injection starts exactly when the pilot fuel injection terminates, and all those real cases in which, on account of the presence of inevitable factors such as ageing and wear of all the components involved, whether internal or external to the electroinjector, the fluid-dynamic conditions in which the fuel electroinjector operates when the electrical command of the main fuel injection, etc., the hydraulic dwell time between the pilot fuel injection and the main fuel injection is not exactly zero, so that there is an extremely small overlapping between the main fuel injection and the pilot fuel injection, which in any case does not alter appreciably from an engine standpoint the two-hump instantaneous fuel flow rate profile during the pilot and main fuel injections, as shown in Figure 2, where the pilot fuel injection, albeit contiguous, is in any case clearly identified and distinguishable with respect to the main fuel injection. One of these real cases is shown by way of example in Figure 3, where the electrical dwell time between the electrical commands for the pilot and main fuel injections is 30 µs.

In order to obtain said fuel injection rate shaping, in each fuel injection phase in an engine cylinder, the electronic control unit 11 is programmed to generate at least one first electrical command S₁ with a predetermined time duration for activating the electric actuator 10 and thus actuating the shutter 15 and causing the control rod 8 to perform a first opening stroke, followed by a corresponding first closing stroke, for performing the pilot fuel injection, and a second electrical command S₂ with a time duration that is a function of the engine operating conditions for activating the electric actuator 10 and thus actuating the shutter 15 and causing the control rod 8 to perform a second opening stroke, followed by a corresponding second closing stroke, for performing the main fuel injection. The two electrical commands S₁ and S₂ are separated in time by an electrical dwell time, designated by DT, such that the main fuel injection starts exactly when the pilot injection terminates, i.e., from a hydraulic standpoint, such that the pilot and main fuel injections are separated by a zero hydraulic dwell time. In terms of motion of the control rod 8 and of the shutter needle 7, a zero hydraulic dwell time corresponds to the motion condition in which the control rod 8 and the shutter needle 7 start the opening stroke in response to the second electrical command S₂ exactly when they reach the end of the closing stroke performed in response to the first electrical command S₁, thus giving rise to a motion profile of the control rod 8 and of the shutter needle 7 that is without any discontinuity in time.

Figure 2 shows a top graph which depicts, with a dashed line, the time evolutions of the electrical commands, designated by S₁ and S₂, for the pilot fuel injection and, respectively, for the main fuel injection, provided by the electronic control unit 10, and, with a solid line, the time evolution of the displacement, designated by D, of the control rod 8 and hence of the shutter needle 7 in response to the electrical commands S₁ and S₂, with respect to the ordinate "zero" in which the fuel nebulizer 5 is closed. In addition, Figure 2 shows a bottom graph which depicts the time evolution of the instantaneous fuel flow rate, designated by Qᵢ, injected in an engine cylinder during the pilot and main fuel injections, identified respectively by the letters P and M, and consequent upon the displacement D of the control rod 8 and of the open/close needle 7.

As may be noted in the bottom graph of Figure 2, the pilot and main fuel injections are temporally contiguous, or, from a different standpoint, are separated by a substantially zero hydraulic dwell time, which enables a two-hump instantaneous fuel flow rate profile Qᵢ to be obtained, which affords given benefits in terms of reduction of fuel consumption and of emission of pollutant substances, as will be discussed more fully in what follows.

As may be noted in the top graph of Figure 2, the first electrical command S₁ for the pilot fuel injection is generated, and then supplied to the fuel electroinjector 1, starting from a time instant designated by T₁ and has a time evolution comprising a trailing stretch rising from a minimum value, generally zero, up to a maximum value, having the purpose of energizing the electric actuator 10, a first holding stretch holding at the maximum value, with a very short time duration, having the purpose of maintaining energization of the electric actuator 10, a first forward stretch falling from the maximum value to an intermediate value between the minimum value and the maximum value, a second holding stretch holding at the intermediate value, having once again the purpose of maintaining energization of the electric actuator 10, and finally a second forward stretch falling from the intermediate value to the minimum value, which terminates at the instant designated in Figure 2 by T₂. If need be, the second holding stretch can have a zero time duration and hence in practice not be present, thus giving rise to a first electrical command S₁ comprising only a trailing stretch rising from the minimum value to the maximum value, a holding stretch holding ate the maximum value, and a forward stretch falling from the maximum value to the minimum value.

The second electrical command S₂ is generated, and then supplied to the fuel electroinjector 1, starting from a time instant designated by T₃ and such that the control rod 8 starts the corresponding opening stroke not after having reached the end of the closing stroke performed in response to the first electrical command S₁, thus giving rise to a main fuel injection that starts without any discontinuity in time with respect to the pilot fuel injection. In particular, in order to obtain exactly the two-hump instantaneous fuel flow rate profile Qᵢ shown in the bottom diagram of Figure 2, the time instant T₃ is such that the control rod 8 starts the opening stroke in response to the second electrical command S₁ exactly when it reaches the end of the closing stroke performed in response to the first electrical command S₁. A displacement without any discontinuity in time identical to that of the control rod 8 is performed also by the shutter needle 7 on which the control rod 8 acts, thus determining closing of the injection holes of the fuel injection nozzle of the fuel nebulizer 5 for a substantially zero time, to which there corresponds a hydraulic dwell time between the pilot fuel injection and the main fuel injection that is also substantially zero.

The time interval T₃-T₂ defines, instead, the aforementioned electrical dwell time DT between the two electrical commands S₁ and S₂.

The second electrical command S₂ has a time development very similar to that of the first electrical command S₁, with the only difference that the second holding stretch is always present and has a time duration much longer than that of the corresponding holding stretch, when present, of the first electrical command S₁ and can vary as a function of the engine operating conditions. The second electrical command S₂ terminates at the time instant denoted in Figure 2 by T₄.

The fuel amount V_{P} injected during the pilot fuel injection is substantially independent of the fuel pressure and is proportional to the volume of the cylinder combustion chamber. In particular, in applications on engines for passenger motor vehicles, the fuel amount injected during the pilot fuel injection is in the region of 1-3 mm³, whereas in applications on engines for industrial motor vehicles said value increases up to 5-7 mm³.

The fuel amount V_{M} injected during the main fuel injection depends, instead, not only upon the displacement of the individual engine cylinder, but also upon the engine operating point defined by engine speed. and load and increases starting from a minimum value of 4-5 mm³, at idling, up to a maximum value higher than 55 mm³ (for displacement of the individual cylinder by approximately 330 cc) or higher than 70 mm³ (for displacement of the individual cylinder by approximately 500 cc), which it assumes at maximum torque, i.e., between 1900 and 2300 r.p.m.

Since the fuel amount to be injected during the main fuel injection is higher than the fuel amount to be injected during the pilot fuel injection, during the main fuel injection the control rod 8 performs an opening stroke longer than the one that it performs during the pilot fuel injection. In other words, during the pilot and main fuel injections the motion of the control rod 8 occurs in so-called "ballistic" conditions, with the difference that during the main fuel injection the control rod 8 reaches the maximum lift possible so that the instantaneous fuel flow rate through the fuel nebulizer reaches the maximum value possible (see the diagram of Figure 2), also in order to favour the robustness and repeatability of the main injection.

With reference again to Figure 1, according to a further aspect of the present invention, the electronic control unit 11 is moreover programmed to perform the fuel injection rate shaping in the way described above, i.e., in such a way that the hydraulic dwell time between the pilot fuel injection and the main fuel injection will be zero only in those engine operating conditions characterized by reduced fuel ignition delays, where fuel combustion is prevalently diffusive and the heat released during fuel combustion is sensitive to the fuel injection law.

In greater detail, the electronic control unit 11 is programmed to shape the fuel injection rate in engine operating points comprised in an area of the engine operating plane that is located approximately at the centre of the area subtended by the engine power curve.

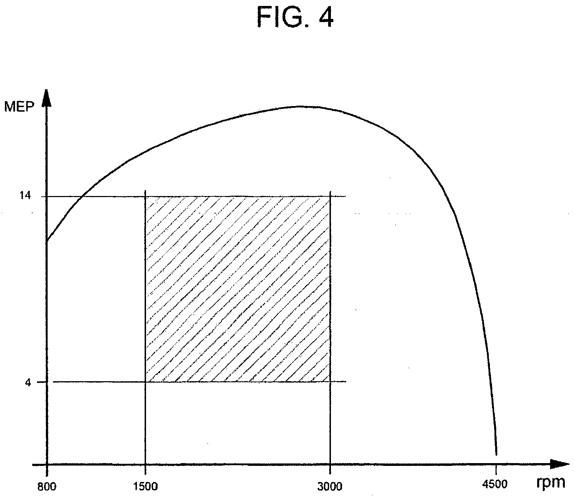

Figure 4 shows an engine operating plane, where the abscissa axis represents the engine speed(RPM), and the ordinate axis represents the engine load, expressed as mean effective pressure (MEP), which, as is known, is the ratio between useful work per engine cycle and displacement volume. Moreover, Figure 3 shows the engine power curve, which as is known, is a curve that indicates the maximum power supplied by the engine as a function of the engine speed, and the area of the engine operating plane that is located approximately at the centre of the area subtended by the engine power curve and in which the fuel injection rate is shaped as described above.

As may be appreciated in Figure 4, the area in which the above-described fuel injection rate shaping is particularly advantageous is characterized by an engine speed comprised between approximately 1,500 and 3,000 r.p.m. and a mean effective pressure comprised between approximately 4 and 14 bar.

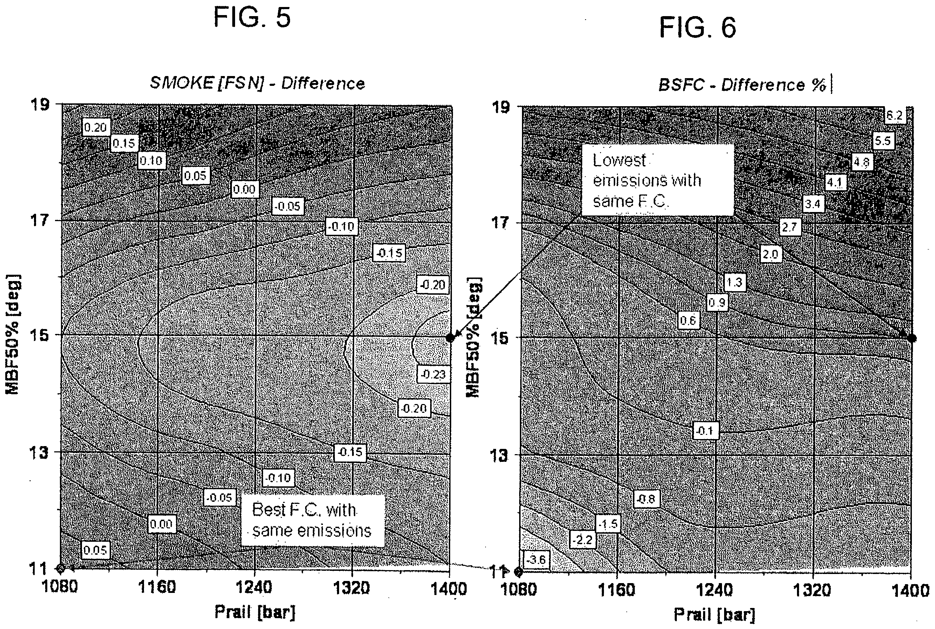

Figures 5 and 6 show instead graphs representing the average reductions of the levels of emission of pollutant substances and, respectively, of the fuel consumption obtained on a type-approval cycle implementing the fuel injection rate shaping described above in the engine operating area shown in Figure 4.

In particular, the graphs in Figures 5 and 6 represent, on the abscissa axes, the fuel injection pressure, expressed in bar, and, on the ordinate axes, the engine crankshaft, expressed in degrees, where a predetermined fraction of the mass of the fuel injected into the combustion chamber has burnt, generally 50% (50% Mass Fraction Burned - MFB50%). The latter is a quantity that indicates the angular phasing of the position of the fuel combustion in an engine cycle and can, for example, be calculated as the mathematical centroid of the heat-release rate (HRR) curve in the engine cycle.

In addition, Figures 5 and 6 show various level curves characterized by various differential values computed with respect to the case in which the fuel injection rate shaping described above has not been implemented: in Figure 5, which relates to the mean reduction of the levels of emission of pollutant substances, said differential values represent the so-called "filter-smoke number" (FSN), which, as is known, is a quantity indicative of engine smoking, which in turn is indicative of the soot amount. The tests were all conducted at the same level of emission of nitrogen oxides (NOx) generated during fuel combustion. In Figure 6, which relates to the mean reduction of fuel consumption, said differential values represent the so-called "brake specific fuel consumption" (BSFC), which, as is known, is a quantity indicative of the fuel efficiency and is defined as the ratio between the fuel consumption and the power produced, it being thus also interpretable as fuel consumption per specific power.

Moreover, Figures 5 and 6 show both those points corresponding to the lowest levels of emission of pollutant substances obtained at the same fuel consumption and those points corresponding to the lowest fuel consumption obtained at the same levels of emission of pollutant substances.

From an analysis of Figures 5 and 6 it may be appreciated, in qualitative terms, which is the reduction in the fuel consumption at the same levels of emission of pollutant substances or else the reduction in the levels of emission of pollutant substances at the same fuel consumption that the fuel injection rate shaping in which the hydraulic dwell time between the pilot fuel injection and the main fuel injection is zero and carried out in the engine operating area shown in Figure 4 allows to achieve, depending on the requirements deriving from engine applications. In quantitative terms, instead, the experimental campaign conducted by the Applicant has made it possible to quantify in an amount of approximately 2% the mean reduction of fuel consumption on the type-approval cycle known as "new European driving cycle" (NEDC) used by all the automotive manufacturers for calculating fuel consumption, meeting the levels of emission both according to the Euro 5 standard and according to the future Euro 6 standard, given the same combustion noise (CN) and smoking, with maximum values of reduction that reach even 5-6%, and to quantify in an amount of approximately 20% the mean reduction of smoking on the type-approval cycle both according to the Euro 5 standard and according to the Euro 6 standard, given the same fuel consumption and combustion noise, with maximum values of reduction that reach even 30%. In particular, the benefit of 2% has been obtained prevalently in the extra-urban driving cycle (EUDC) of the NEDC.

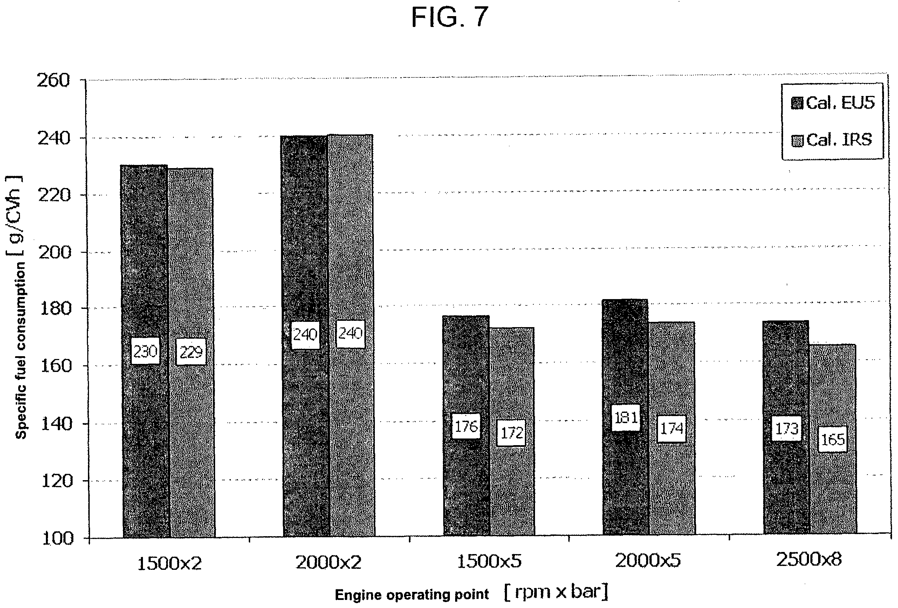

Furthermore, Figure 7 finally shows a comparative graph of the specific fuel consumptions, expressed in g/CVh, in various engine operating points, defined by engine speed and mean effective pressure, obtained with a fuel injection strategy that meets the limits set by the Euro 5 standard, identified in Figure 6 by the acronym EU5, and in which the main fuel injection is preceded by one or two (according to the engine operating point) pilot fuel injections arranged sufficiently far from the main fuel injection as to give rise to fuel combustions distinct from that of the main fuel injection, and with a fuel injection rate shaping according to the present invention, identified in Figure 7 by the acronym IRS.
The experimental campaign conducted by the Applicant has moreover highlighted that for mean effective pressures ranging between 8 and 14 bar (corresponding to which are reduced ignition delays), there has been recorded a combustion noise reduction, which enables, if invested in fuel consumption and pollutant substance emission reduction, increase both in the fuel injection advance, which, as is known, brings about a fuel consumption reduction, and in the fuel injection pressure, which, as is known, brings about a reduction in the total amount of NOx and soot produced. In addition, given the same total amount of NOx and soot produced, by acting on the exhaust-gas recirculation (EGR) it is possible to vary, according to the requirements, the part of NOx produced, which, as is known, in the majority of diesel motor vehicles are not currently treated by the exhaust-gas post-treatment systems, but rather controlled only by acting on the fuel combustion, with respect to the part of the soot that, as is known, is treated via a Diesel particulate filter arranged at the exhaust. In particular, an increase in the amount of exhaust gas recirculation brings about a reduction in the amount of NOx produced and an increase in the amount of soot produced, whereas a reduction in the amount of exhaust gas recirculation brings about an increase in the amount of NOx produced and a reduction in the amount of soot produced.

The experimental campaign conducted by the Applicant has moreover highlighted that, for mean effective pressures of between 4 and 8 bar (to which there correspond longer ignition delays), there has instead been recorded an increase in the combustion noise and a decrease in the amount of soot produced by the fuel combustion by the same amount that would be obtained in the case where the main fuel injection is not preceded by the pilot fuel injection. Consequently, in said engine operating conditions, in order to reduce the ignition delay, it becomes necessary to envisage also a further pilot fuel injection prior to the pilot and main fuel injections that is arranged sufficiently far from the subsequent pilot fuel injection as to give rise to a distinct fuel combustion. The provision of this further pilot fuel injection again enables improvement of the trade-off between the amount of NOx and of soot generated by the fuel combustion at the same combustion noise, once again thanks to an increase in the advance and pressure of fuel injection. In quantitative terms, the provision of this further pilot fuel injection has enabled the fuel injection rate shaping in which the hydraulic dwell time between the pilot fuel injection and the main fuel injection is zero to achieve an NVH (acronym standing for Noise, Vibration, and Harshness) behaviour similar to that of a fuel injection strategy in which the main fuel injection is preceded by two pilot fuel injections arranged sufficiently far from the main fuel injection as to give rise to fuel combustions distinct from that of the main fuel injection, maintaining the advantage of fuel consumption reduction. As regards the NVH behaviour, this is, as is known, an evaluation that is very widely used in the automotive field for measuring the comfort of a motor vehicle and is the result of the combination of three parameters: the noise level in the motor vehicle during travelling, the vibrations perceived by the driver, and the harshness of the motor vehicle as it advances during sudden motion transitions (for example pot-holes).

Finally, the experimental campaign conducted by the Applicant has highlighted that the fuel injection rate shaping in which the hydraulic dwell time between the pilot fuel injection and the main fuel injection is zero has proven to be far from advantageous, if indeed not even slightly disadvantageous, when the engine is cold or warming up, on account of the longer ignition delays, as compared to a fuel injection strategy in which the fuel injection rate shaping is not implemented and the main fuel injection is preceded by two pilot fuel injections arranged sufficiently far from the main fuel injection as to give rise to fuel combustions distinct from that of the main fuel injection. This has led the Applicant to note that the fuel injection rate shaping in which the hydraulic dwell time between the pilot fuel injection and the main fuel injection is zero proves to be advantageous only for engine coolant temperatures higher than 40-45°C, preferably comprised between 65°C and 80°C.

It is evident that the fuel injection system described above may undergo other modifications and improvements, without thereby departing from the scope of the invention defined by the appended claims.

For example, the fuel injection system could have an architecture different from the common rail one described previously, in particular, of the type described in EP 1,612,401 B1, EP 1,612,405 B1 and EP 1,612,406 B1 in the name of the Applicant, in which the pressurized fuel accumulation volume, instead of being defined by a single concentrated common rail, is split into distinct and distributed accumulation volumes, or else of the type used prior to marketing of the common rail, in which the fuel injectors were supplied directly by a high-pressure fuel pump operated in such a way as to carry out delivery of fuel under pressure in synchronism with actuation of the fuel injectors, said delivery being, that is, discontinuous in time, phased with the engine, and cyclically constant.

Furthermore, to the pilot and main fuel injections with zero hydraulic dwell time and possibly to the further pilot fuel injections mentioned above, it is possible to combine one or more of the fuel injections described in the aforementioned patent No. EP 1,035,314 B1 filed in the name of the present applicant, regarding execution of multiple fuel injections.

In addition, all what has been said previously with reference to a pilot fuel injection and to a main fuel injection that starts without any discontinuity with respect to the pilot fuel injection, must not be considered limited to this single pair of fuel injections, but is valid, and hence applicable, to any pair of temporally consecutive fuel injections provided by a fuel injection system.

Finally, all what has been said previously with reference to a fuel injection rate shaping in which the main fuel injection starts without any discontinuity in time with respect to the pilot fuel injection, substantially when the latter terminates, is valid, and can hence be applied, also to fuel injection rate shapings in which the pilot fuel injection overlaps the main fuel injection, albeit with benefits progressively less appreciable as the overlapping degree increases.

## Claims

1. A fuel injection system (2) for an internal combustion engine, comprising at least one fuel electroinjector (1) and an electronic control unit (11) configured to supply the fuel electroinjector (1), in a fuel injection phase in an engine cylinder, with at least a first electrical command (S1) to cause a pilot fuel injection (P) to be carried out, and a second electrical command (S2) to cause a main fuel injection (M) temporally subsequent to the pilot fuel injection (P) to be carried out, the first and second electrical commands (S1, S2) being separated in time by an electrical dwell time (DT) such that the main fuel injection (M) starts without any discontinuity in time with respect to the pilot fuel injection (P), substantially when the latter (P) terminates; **characterized in that** the main fuel injection (M) starts without any discontinuity in time with respect to the pilot fuel injection (P) when the internal combustion engine is warmed-up and in engine operating points **characterized by** an engine speed comprised between approximately 1,500 and 3,000 r.p.m. and a mean effective pressure comprised between approximately 4 and 14 bar; whereas the pilot fuel injection (P) and a further pilot fuel injection are arranged sufficiently far from the main fuel injection (M) so as to give rise to fuel combustion distinct from that of the main fuel injection (M) when the internal combustion engine is cold or warming-up.

2. The fuel injection system according to claim 1, wherein the electronic control unit (11) is further configured to cause the pilot and main fuel injections (P, M) to be carried out when engine coolant temperature is higher than 40-45°C, preferably comprised between 65°C and 80°C.

3. The fuel injection system according to any one of the preceding claims, wherein the electronic control unit (11) is further configured to supply the fuel electroinjector (1) with a third electrical command to cause the further pilot fuel injection to be carried out prior to the pilot and main fuel injections (P, M) and far from the pilot fuel injection (P) by a non-zero dwell time.

4. The fuel injection system according to any one of the preceding claims, wherein the fuel amount injected during the pilot fuel injection is different from the fuel amount injected during the main fuel injection.

5. The fuel injection system according to Claim 4, wherein the fuel amount injected during the pilot fuel injection is smaller than the fuel amount injected during the main fuel injection.

6. The fuel injection system according to any one of the preceding claims, wherein the fuel electroinjector (1) comprises a fuel nebulizer (5) including a fuel injection nozzle (6) and a shutter needle (7) movable along opening and closing strokes for opening and closing the fuel nebulizer (5); and a fuel metering servovalve (9) operable to control the fuel nebulizer (5); wherein the fuel metering servovalve (9) is operable by the first electrical command (S1) to cause the shutter needle (7) of the fuel nebulizer (5) to carry out a first opening displacement followed by a first closing displacement, which terminates when the shutter needle (7) closes the fuel injection nozzle (6), so as to result in a first opening degree of the fuel injection nozzle (6), and by the second electrical command (S2) to cause the shutter needle (7) of the fuel nebulizer (5) to carry out a second opening displacement followed by a second closing displacement, so as to result in a second opening degree of the fuel injection nozzle (6); and wherein the second opening displacement of the open/close needle (7) starts at the end of the first closing displacement thereof, so as to result in a motion profile without any discontinuity in time between the first closing displacement and the second opening displacement.

7. The fuel injection system according to Claim 6, wherein the first opening degree of the fuel injection nozzle is different from the second opening degree.

8. The fuel injection system according to Claim 7, wherein the first opening degree of the fuel injection nozzle is smaller than the second opening degree.

9. The fuel injection system according to any one of the preceding claims, wherein each of the first and second electrical commands (S1, S2) is an electrical current that changes in time so as to define a profile comprising a trailing stretch rising from a minimum value to a maximum value, a first holding stretch holding at the maximum value, and a first falling stretch falling from the maximum value to an intermediate value between the minimum and maximum values, a second holding stretch holding at the intermediate value, and a second falling stretch falling from the intermediate value to the minimum value.

10. The fuel injection system according to any one of claims 1 to 8, wherein each of the first and second electrical commands (S1, S2) is an electric current that changes in time so as to define a profile comprising a trailing stretch rising from a minimum value to a maximum value, a holding stretch holding at the maximum value, and a falling stretch falling from the maximum value to the minimum value.

11. The fuel injection system according to any one of the preceding claims, wherein it is of a common rail type.

12. An automotive electronic control unit (11) configured to control operation of a fuel injection system (2) as claimed in any one of the preceding claims.

13. A software loadable in an automotive electronic control unit (11) for a fuel injection system (1) and designed to cause, when run, the automotive electronic control unit (11) as claimed in claim 12 to control operation of the fuel injection system (2) as claimed in any one of the preceding claims 1 to 11 .

## Patentansprüche

1. Kraftstoffeinspritzsystem (2) für einen Verbrennungsmotor, das mindestens einen Elektro-Kraftstoffeinspritzer (1) und eine elektronische Steuereinheit (11) umfasst, die konfiguriert ist, den Elektro-Kraftstoffeinspritzer (1), in einer Kraftstoffeinspritzphase in einem Motorzylinder, mit mindestens einem ersten elektrischen Befehl (S1), um die Durchführung einer Vorkraftstoffeinspritzung (P) zu veranlassen, und einem zweiten elektrischen Befehl (S2), um die Durchführung einer Hauptkraftstoffeinspritzung (M) zeitlich folgend auf die Vorkraftstoffeinspritzung (P) zu veranlassen, zu versorgen, wobei die ersten und zweiten elektrischen Befehle (S1, S2) durch eine elektrische Haltezeit (DT) zeitlich getrennt sind, sodass die Hauptkraftstoffeinspritzung (M) in Bezug auf die Vorkraftstoffeinspritzung (P) ohne jegliche zeitliche Unterbrechung beginnt, im Wesentlichen, wenn Letztere (P) endet; **dadurch gekennzeichnet, dass** die Hauptkraftstoffeinspritzung (M) in Bezug auf die Vorkraftstoffeinspritzung (P) ohne jegliche zeitliche Unterbrechung beginnt, wenn der Verbrennungsmotor betriebswarm und in Motorbetriebspunkten ist, die durch eine Motorgeschwindigkeit zwischen 1.500 und 3.000 r.p.m. und einen mittleren Effektivdruck zwischen ungefähr 4 und 14 bar gekennzeichnet sind, wohingegen die Vorkraftstoffeinspritzung (P) und eine weitere Vorkraftstoffeinspritzung ausreichend weit von der Hauptkraftstoffeinspritzung (M) angeordnet sind, um eine Kraftstoffverbrennung zu ermöglichen, die sich von der der Hauptkraftstoffeinspritzung (M) unterscheidet, wenn der Verbrennungsmotor kalt ist oder anläuft.

2. Kraftstoffeinspritzsystem nach Anspruch 1, wobei die elektronische Steuereinheit (11) ferner konfiguriert ist, die Durchführung der Vor- und Hauptkraftstoffeinspritzung (P, M) zu veranlassen, wenn die Motorkühlmitteltemperatur höher als 40-45 °C, vorzugsweise zwischen 65 °C und 80 °C, ist.

3. Kraftstoffeinspritzsystem nach einem der vorhergehenden Ansprüche, wobei die elektronische Steuereinheit (11) ferner konfiguriert ist, den Elektrobrennstoffeinspritzer (1) mit einem dritten elektrischen Befehl zu versorgen, um die Durchführung der weiteren Voreinspritzung vor der Vor- und Hauptkraftstoffeinspritzung (P, M) und in einer Haltezeit (P) weit weg von der Vorkraftstoffeinspritzung (P) zu bewirken.

4. Kraftstoffeinspritzsystem nach einem der vorhergehenden Ansprüche, wobei sich die während der Vorkraftstoffeinspritzung eingespritzte Kraftstoffmenge von der während der Hauptkraftstoffeinspritzung eingespritzten Kraftstoffmenge unterscheidet.

5. Kraftstoffeinspritzsystem nach Anspruch 4, wobei die während der Vorkraftstoffeinspritzung eingespritzte Kraftstoffmenge kleiner als die während der Hauptkraftstoffeinspritzung eingespritzte Kraftstoffmenge ist.

6. Kraftstoffeinspritzsystem nach einem der vorhergehenden Ansprüche, wobei der Elektro-Kraftstoffeinspritzer (1) einen Kraftstoffzerstäuber (5), der eine Kraftstoffeinspritzdüse (6) und eine Verschlussnadel (7) umfasst, die entlang Öffnungs- und Schließhüben zum Öffnen und Schließen des Kraftstoffzerstäubers (5) bewegbar ist; und ein Kraftstoffmessstellventil (9), das betriebsfähig ist, den Kraftstoffzerstäuber (5) zu steuern, umfasst; wobei das Kraftstoffmessstellventil (9) betriebsfähig ist, durch den ersten elektrischen Befehl (S1) die Verschlussnadel (7) des Kraftstoffzerstäubers (5) zu veranlassen, eine erste Öffnungsverschiebung gefolgt von einer ersten Verschlussverschiebung durchzuführen, die endet, wenn die Verschlussnadel (7) die Kraftstoffeinspritzdüse (6) so verschließt, dass ein erster Öffnungsgrad der Kraftstoffeinspritzdüse (6) entsteht, und durch den zweiten elektrischen Befehl (S2) die Verschlussnadel (7) des Kraftstoffzerstäubers (5) zu veranlassen, eine zweite Öffnungsverschiebung gefolgt von einer zweiten Verschlussverschiebung so durchzuführen, dass ein zweiter Öffnungsgrad der Kraftstoffeinspritzdüse (6) entsteht; und wobei die zweite Öffnungsverschiebung der Öffnungs-/Verschlussnadel (7) am Ende der ersten Verschlussverschiebung davon beginnt, sodass sich ein Bewegungsprofil ohne jegliche zeitliche Unterbrechung zwischen der ersten Öffnungsverschiebung und der zweiten Öffnungsverschiebung ergibt.

7. Kraftstoffeinspritzsystem nach Anspruch 6, wobei sich der erste Öffnungsgrad der Kraftstoffeinspritzdüse von dem zweiten Öffnungsgrad unterscheidet.

8. Kraftstoffeinspritzsystem nach Anspruch 7, wobei der erste Öffnungsgrad der Kraftstoffeinspritzdüse kleiner als der zweite Öffnungsgrad ist.

9. Kraftstoffeinspritzsystem nach einem der vorhergehenden Ansprüche, wobei jeder der ersten und zweiten elektrischen Befehle (S1, S2) ein elektrischer Strom ist, der sich zeitlich so verändert, dass ein Profil definiert wird, das eine nachlaufende Ausdehnung, die von einem Minimalwert auf einen Maximalwert steigt, eine erste haltende Ausdehnung, die sich bei dem Maximalwert hält, und eine erste fallende Ausdehnung, die von dem Maximalwert auf einen Zwischenwert zwischen den Minimal- und Maximalwerten fällt, eine zweite haltende Ausdehnung, die sich bei dem Zwischenwert hält, und eine zweite fallende Ausdehnung, die sich von den Zwischenwert auf den Minimalwert ausdehnend fällt, umfasst.

10. Kraftstoffeinspritzsystem nach einem der Ansprüche 1 bis 8, wobei jeder der ersten und zweiten elektrischen Befehle (S1, S2) ein elektrischer Strom ist, der sich zeitlich so verändert, dass ein Profil definiert wird, das eine nachlaufende Ausdehnung, die von einem Minimalwert auf einen Maximalwert steigt, eine haltende Ausdehnung, die sich bei dem Maximalwert hält, und eine fallende Ausdehnung, die von dem Maximalwert auf den Minimalwert fällt, umfasst.

11. Kraftstoffeinspritzsystem nach einem der vorhergehenden Ansprüche, wobei es von einer Common-Rail-Bauart ist.

12. Elektronische Fahrzeugsteuereinrichtung (11), die konfiguriert ist, den Betrieb eines Kraftstoffeinspritzsystems (2) nach einem der vorhergehenden Ansprüche zu steuern.

13. Software, die in eine elektronische Fahrzeugsteuereinrichtung (11) für ein Kraftstoffeinspritzsystem (1) geladen werden kann und dafür ausgelegt ist, bei Ausführung, die elektronische Fahrzeugsteuereinrichtung (11) nach Anspruch 12 zu veranlassen, den Betrieb des Kraftstoffeinspritzsystems (2) nach einem der vorhergehenden Ansprüche 1 bis 11 zu steuern.

## Revendications

1. Système d'injection de carburant (2) destiné à un moteur à combustion interne, comprenant au moins un électro-injecteur de carburant (1) ou une unité de commande électronique (11) conçue pour délivrer à l'électro-injecteur de carburant (1), au cours d'une phase d'injection de carburant dans un cylindre du moteur, au moins une première commande électrique (S1) pour faire qu'une injection pilote de carburant (P) soit exécutée, et une deuxième commande électrique (S2) pour faire qu'une injection principale de carburant (M) chronologiquement ultérieure à l'injection pilote de carburant (P) soit exécutée, les première et deuxième commandes électriques (S1, S2) étant séparées dans le temps par un temps de pause électrique (DT), de manière que l'injection principale de carburant (M) démarre sans aucune discontinuité dans le temps par rapport à l'injection pilote de carburant (P), sensiblement lorsque cette dernière (P) prend fin ; **caractérisé en ce que** l'injection principale de carburant (M) démarre sans aucune discontinuité dans le temps par rapport à l'injection pilote de carburant (P), lorsque le moteur à combustion interne est mis en température et à des points de fonctionnement du moteur **caractérisés par** un régime du moteur compris entre environ 1500 et 3000 tr/min et une pression moyenne effective comprise entre environ 4 et 14 bar ; tandis que l'injection pilote de carburant (P) et une injection pilote supplémentaire de carburant sont positionnées suffisamment loin de l'injection principale de carburant (M) pour donner lieu à une combustion de carburant distincte de celle de l'injection principale de carburant (M), lorsque le moteur à combustion interne est froid ou qu'il se met en température.

2. Système d'injection de carburant selon la revendication 1, dans lequel l'unité de commande électronique (11) est conçue en outre pour faire que les injections pilote et principale de carburant (P, M) soient exécutées lorsque la température du liquide de refroidissement du moteur est supérieure à 40 à 45 °C, étant comprise de préférence entre 65 °C et 80 °C.

3. Système d'injection de carburant selon l'une quelconque des revendications précédentes, dans lequel l'unité de commande électronique (11) est conçue en outre pour délivrer à l'électro-injecteur de carburant (1) une troisième commande électrique pour faire que l'injection pilote supplémentaire de carburant soit exécutée avant les injections pilote et principale de carburant (P, M) et soit séparée de l'injection pilote de carburant (P) par un temps de pause non nul.

4. Système d'injection de carburant selon l'une quelconque des revendications précédentes, dans lequel la quantité de carburant injectée au cours de l'injection pilote de carburant est différente de la quantité de carburant injectée au cours de l'injection principale de carburant.

5. Système d'injection de carburant selon la revendication 4, dans lequel la quantité de carburant injectée au cours de l'injection pilote de carburant est inférieure à la quantité de carburant injectée au cours de l'injection principale de carburant.

6. Système d'injection de carburant selon l'une quelconque des revendications précédentes, dans lequel l'électro-injecteur de carburant (1) comprend un nébuliseur de carburant (5) comportant un injecteur de carburant (6) et un pointeau obturateur (7) mobile le long de courses d'ouverture et de fermeture pour ouvrir et fermer le nébuliseur de carburant (5) ; et un servodistributeur de dosage de carburant (9) permettant de commander le nébuliseur de carburant (5) ; dans lequel le servodistributeur de dosage de carburant (9) peut être actionné au moyen de la première commande électrique (S1) pour faire que le pointeau obturateur (7) du nébuliseur de carburant (5) effectue un premier déplacement d'ouverture, suivi d'un premier déplacement de fermeture qui prend fin lorsque le pointeau obturateur (7) ferme l'injecteur de carburant (6), de manière à obtenir un premier degré d'ouverture de l'injecteur de carburant (6), et au moyen de la seconde commande électrique (S2) pour faire que le pointeau obturateur (7) du nébuliseur de carburant (5) effectue un second déplacement d'ouverture, suivi d'un second déplacement de fermeture, de manière à obtenir un second degré d'ouverture de l'injecteur de carburant (6) ; et dans lequel le second déplacement d'ouverture du pointeau d'ouverture/de fermeture (7) commence à la fin du premier déplacement de fermeture de celui-ci, de manière à obtenir un profil de mouvement sans aucune discontinuité dans le temps entre le premier déplacement de fermeture et le second déplacement d'ouverture.

7. Système d'injection de carburant selon la revendication 6, dans lequel le premier degré d'ouverture de l'injecteur de carburant est différent du second degré d'ouverture.

8. Système d'injection de carburant selon la revendication 7, dans lequel le premier degré d'ouverture de l'injecteur de carburant est inférieur au second degré d'ouverture.

9. Système d'injection de carburant selon l'une quelconque des revendications précédentes, dans lequel chacune des première et seconde commandes électriques (S1, S2) est un courant électrique qui varie dans le temps, de manière à définir un profil comprenant un intervalle arrière s'élevant d'une valeur minimale à une valeur maximale, un premier intervalle de maintien se maintenant à la valeur maximale, et un premier intervalle de descente descendant de la valeur maximale à une valeur intermédiaire comprise entre les valeurs minimale et maximale, un second intervalle de maintien se maintenant à la valeur intermédiaire, et un second intervalle de descente descendant de la valeur intermédiaire à la valeur minimale.

10. Système d'injection de carburant selon l'une quelconque des revendications 1 à 8, dans lequel chacune des première et seconde commandes électriques (S1, S2) est un courant électrique qui varie dans le temps, de manière à définir un profil comprenant un intervalle arrière s'élevant d'une valeur minimale à une valeur maximale, un intervalle de maintien se maintenant à la valeur maximale, et un intervalle de descente descendant de la valeur maximale à la valeur minimale.

11. Système d'injection de carburant selon l'une quelconque des revendications précédentes, dans lequel il est du type rampe commune.

12. Unité de commande électronique automobile (11) conçue pour commander le fonctionnement d'un système d'injection de carburant (2) tel que revendiqué dans l'une quelconque des revendications précédentes.

13. Logiciel pouvant être chargé dans une unité de commande électronique automobile (11), destiné à un système d'injection de carburant (1) et conçu pour faire, lorsqu'il est exécuté, que l'unité de commande électronique automobile (11), telle que revendiquée dans la revendication 12, commande le fonctionnement du système d'injection de carburant (2), tel que revendiqué dans l'une quelconque des revendications 1 à 11 précédentes.
